(19) Europäisches Patentamt
European Patent Office
Office européen des brevets

(11) Veröffentlichungsnummer: **0 222 296 B1**

(12) **EUROPÄISCHE PATENTSCHRIFT**

(45) Veröffentlichungstag der Patentschrift: **11.09.91**

(51) Int. Cl.5: **B32B 27/18**, H01G 4/18, H01B 3/44

(21) Anmeldenummer: **86115241.1**

(22) Anmeldetag: **04.11.86**

# (54) Koextrudierte, biaxial orientierte Mehrschichtfolie.

(30) Priorität: **13.11.85 DE 3540214**

(43) Veröffentlichungstag der Anmeldung:
**20.05.87 Patentblatt 87/21**

(45) Bekanntmachung des Hinweises auf die Patenterteilung:
**11.09.91 Patentblatt 91/37**

(84) Benannte Vertragsstaaten:
**BE DE FR GB IT NL**

(56) Entgegenhaltungen:
**EP-A- 0 008 623**
**US-A- 4 233 470**

**CHEMICAL ABSTRACTS, Band 96, Nr. 37, 14. Juni 1982, Seite 40, Zusammenfassung Nr. 200670n, Columbus, Ohio, US; J.D. SPIVACK et al.: "Selected novel trivalent organophosphorus processing stabilizers for polyolefins", & ACS SYMP. SER. 1981, 171 (PHOSPHORUS CHEM.) 351-4**

(73) Patentinhaber: **HOECHST AKTIENGESELLSCHAFT**
**Postfach 80 03 20**
**W-6230 Frankfurt am Main 80(DE)**

(72) Erfinder: **Bothe, Lothar, Dr.**
**Am Heiligenhaus 9**
**W-6500 Mainz(DE)**
Erfinder: **Schlögl, Gunter, Dr.**
**Finkenweg 2**
**W-6233 Kelkheim(DE)**
Erfinder: **Crass, Günther, Dipl.-Ing.**
**Bachstrasse 7**
**W-6204 Taunusstein-Wehen(DE)**

EP 0 222 296 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine koextrudierte, biaxial orientierte Mehrschichtfolie mit einer Basisschicht aus hoohreinem Polypropylen mit weniger als 100 ppm Restaschegehalt.

Diese Mehrschichtfolie findet Verwendung als Dielektrikum in imprägnierten Folienkondensatoren, die aus derartigen Mehrschichtfolien und Metallfolien aufgebaut sind. Dabei kann es sich sowohl um Leistungskondensatoren als auch um Kondensatoren handeln, die im Bereich der Mikroelektronik eingesetzt werden.

Im Stand der Technik ist der Einsatz von Folien aus Kunststoff als Elektroisoliermaterial seit langem bekannt. Die Folien werden sowohl als Dielektrikum in Kondensatoren als auch für Kabelisolierungen oder als Trägerfolien für selbstklebende Isolierbänder verwendet.

Derartige Folien müssen bestimmte elektrische Eigenschaften besitzen, wie beispielsweise eine hohe Resistenz gegen Glimmentladungen, die vor allem an solchen Stellen entstehen, wo zwischen dem Schichtaufbau, bestehend abwechselnd aus Metallfolien als Elektroden und Dielektrikum, kleinste Einschlüsse von Gasen vorhanden sind, die durch das angelegte elektrische Feld ionisiert werden und in diesem Zustand die Dielektrikumsfolie angreifen können.

Um Glimmentladungen zu vermeiden, werden die Kondensatoren mit Inertgasen geflutet oder mit Imprägnierflüssigkeiten getränkt. Als Inertgas wird beispielsweise $SF_6$ verwendet, das sich nur sehr schwer ionisieren läßt. Imprägnierflüssigkeiten sind Mineralöl oder Verbindungen wie Trichlorbiphenyl, Diethylhexylphthalat, Vinylxylylethan, Benzylneocaprat oder Isopropylbiphenyl. Derartige Imprägnierflüssigkeiten können auch für die Isolierungen von Hochspannungskabeln verwendet werden.

In der DE-OS 29 42 298 ist eine Folie beschrieben, die mit derartigen Imprägnierflüssigkeiten getränkt werden kann.

Insbesondere bei sehr kleinen Kapazitäten von beispielsweise 50 bis 10.000 pF werden Polypropylenfolien als Dielektrikum in Verbindung mit dünnen Metallfolien als Elektroden in Kondensatoren eingesetzt. Diese Kondensatoren werden zum Erzielen einer Kapazitätsgenauigkeit von 1 bis 3 % des angegebenen Kapazitätswertes mit den voranstehend angeführten Imprägniermitteln getränkt. Im Betrieb derartiger Kondensatoren kommt es am Übergang zwischen dem Dielektrikum und der Metallfolie zu Oxidations- bzw. Korrosionserscheinungen, die zu einer deutlichen Verschlechterung der elektrischen Eigenschaften des Kondensators führen. Insbesondere tritt eine Vergrößerung des dielektrischen Verlustfaktors in Abhängigkeit von der Zeit auf.

Um die Oxidationserscheinungen und somit die Zeitabhängigkeit des dielektrischen Verlustfaktors zu verringern, werden den Kunststoffolien spezielle Stabilisatoren zugegeben, die zwar prinzipiell zu einer besseren Zeitkonstanz des dielektrischen Verlustfaktors führen, jedoch zugleich den Ausgangs- bzw. den Anfangswert des dielektrischen Verlustfaktors in nicht akzeptabler Weise erhöhen.

Aus der europäischen Patentschrift 0 011 796 ist eine biaxial gestreckte Polypropylenfolie zur Verwendung als Elektroisolierfolie bekannt, die aus zwei Lagen besteht und in metallisierter Form zur Herstellung von Kondensatoren verwendet wird. Der Rohstoff für diese Elektrofolie ist hochreines Polypropylen mit einem Restaschegehalt von weniger als 100 ppm, das frei von anorganischen oder organischen Gleitmitteln ist und keine ionogenen Bestandteile enthält. Diese bekannte Elektroisolierfolie wird nach einem der bekannten Verfahren durch Schmelzbeschichtung oder Koextrusion und anschließender biaxialer Streckung hergestellt.

Aufgabe der vorliegenden Erfindung ist es, eine koextrudierte, biaxial orientierte Mehrschichtfolie mit einer Basisschicht aus hochreinem Polypropylen so zu verbessern, daß diese bei ihrem Einsatz in einem Kondensatorwickel eines imprägnierten Folienkondensators einen geringen Anstieg des dielektrischen Verlustfaktors mit der Zeit, bei gleichzeitigem geringem Ausgangswert des Verlustfaktors, aufweist.

Diese Aufgabe wird erfindungsgemäß dadurch gelöst, daß die Deckschichten aus Polypropylen bestehen, daß sowohl in der Basis- als auch in den Deckschichten Stabilisatoren vorhanden sind, und daß die Deckschichten der Mehrschichtfolie die 3-bis 10-fache Menge an Stabilisator im Vergleich zu der Basisschicht enthalten.

In Ausgestaltung der Erfindung sind die Stabilisatoren für das Polypropylen aus den Stoffklassen der sterisch gehinderten Phenole, Thioether, Phosphite, Phosphonite oder Mischungen dieser Stoffe ausgewählt.

Zweckmäßigerweise enthält die Basisschicht bis zu 0,2 Gew.-% an Stabilisator und die einzelne Deckschicht zumindest 0,3 Gew.-% an Stabilisator. Dabei beträgt die gesamte Dicke der Mehrschichtfolie 4 bis 30 $\mu$m, insbesondere 6 bis 20 $\mu$m. Die beiden Deckschichten sind zweckmäßigerweise gleichdick und haben jeweils eine Dicke von 0,3 bis 2,0 $\mu$m, insbesondere von 0,4 bis 0,8 $\mu$m.

Herkömmliche Polypropylenrohstoffe für Folien enthalten ca. 0,05 bis 0,2 Gew.-% an Stabilisator, insbesondere 0,1 Gew.-%, während demgegenüber der Gehalt an Stabilisator in jeder Deckschicht 0,3 bis

1,0 Gew.-%, insbesondere 0,3 bis 0,5 Gew.-% beträgt. Werden phenolische Stabilisatoren verwendet, so wird deren Molmasse größer als 300 g/Mol, insbesondere größer als 1000 g/Mol gewählt.

Des weiteren sind auch phenolische Stabilisatoren in Kombination mit Phosphit- und Phosphonit-haltigen Stabilisatoren in einer Zusammensetzung von 1:5 bis 5:1, insbesondere 1:3 bis 3:1 eingesetzt.

Die Mehrschichtfolie wird in einer Weise verarbeitet, daß ihre Rauhigkeit $R_z$ kleiner/gleich 1,5 µm ist und insbesondere im Bereich von 0,35 bis 0,08 µm liegt und daß die beiden Deckschichten gleiche oder unterschiedliche Rauhigkeit aufweisen. Der Polypropylen-Ausgangsstoff für die Basisschicht ist ein hochreiner Elektrofolien-Rohstoff, der üblicherweise einen Rest-Aschegehalt von weniger als 50 ppm aufweist.

Die voranstehend beschriebene Mehrschichtfolie wird als Dielektrikum in einem elektrischen Folienkondensator verwendet, der im allgemeinen aus zwei derartigen Mehrschichtfolien und zwei Metallfolien aus Aluminium, Zinn oder Blei/Zinn aufgebaut ist, wobei die letzteren als Elektroden dienen und zusammen mit den Mehrschichtfolien zu dem Kondensatorwickel aufgewickelt werden.

Die durch Koextrusion hergestellte beidseitig beschichtete, nacheinander in Längsrichtung bei einer Temperatur von 120 bis 130 °C und in Querrichtung bei einer Temperatur von 160 bis 170 °C gestreckte Mehrschichtfolie hat die schon erwähnte Polypropylen-Basisschicht und Polypropylen-Deckschichten. Die Folie ist um das 5- bis 7-fache längsgestreckt und um das 8- bis 10-fache quergestreckt und weist eine Dichte größer als 0.90 g/cm$^3$ auf.

Die Schmelze des die Schichten bildenden Polymers wird durch eine Flachdüse koextrudiert, die durch Koextrusion erhaltene Folie durch Abkühlen verfestigt, anschließend bei einer Temperatur von 120 bis 130 °C im zuvor erwähnten Verhältnis von 5 bis 7:1 längsgestreckt und bei einer Temperatur von 160 bis 170 °C im Verhältnis von 8 bis 10:1 quergestreckt und zuletzt die biaxial gestreckte Folie thermofixiert.

Als Polypropylen-Ausgangsstoffe können neben dem hochreinen Polypropylen auch Polymerblende aus Polypropylen und anderen Polyolefinen, insbesondere HDPE, LDPE oder Poly-4-methyl-penten-1 verwendet werden. Ebenso können Blockkopolymere, insbesondere Ethylen-, PropylenBlockkopolymere eingesetzt werden. Bei den Kopolymeren beträgt die Komonomer-Menge im allgemeinen maximal 10 Gew.-%, bezogen auf das Kopolymer.

Bei den Deckschichten handelt es sich in der Regel um das gleiche Polypropylen wie es für die Basisschicht verwendet wird. Der einzige Unterschied zwischen der Basisschicht und den Deckschichten besteht im jeweiligen Anteil an Stabilisator für Polypropylen.

Eine umfassende Zusammenstellung von Stabilisatoren für Polypropylen wird von T. J. Henman in der Publikation "World Index of Polyolefine Stabilizers", Kogan Page Ltd., London (1982) gegeben, aus der beispielsweise

einige wichtige Stabilisatoren wie folgt sind:

- Kondensationsprodukt aus Aceton, Nonylphenol und Dilauryl-thio-dipropionat
- 2.6-Ditertiärbutyl-4-methylphenol
- 1.3.5-Trimethyl-2.4.6-tri(3.5-ditertiärbutyl-4-hydroxy-benzyl)benzol
- Tetrakis-methylen(3.5-ditertiärbutyl-4-hydroxy-hydrocinnamat)methan
- Mischung aus 2-Ethoxy-5-tertiärbutyl-2'-ethyl-oxalsäure-bis-anilid(85-90%) und 2-Ethoxy-5-tertiärbutyl-2'-ethyl-4'-tertiärbutyl-oxalsäure-bis-anilid (10-15%)
- Tris(nonylphenyl)phosphit, und zwar Tris(mono-nonylphenyl)phosphit, auch im Gemisch mit Tris(dinonylphenyl)phosphit,
- Dioctadecyldisulfid
- 1.3.5-Tris(4-tertiärbutyl-3-hydroxy-2.6-dimethyl-benzyl)-s-triazin-2.4.6(1 H, 3 H, 5 H)-trion
- Bis[2.2'-Methylen-bis-(4-methyl-6-tertiärbutylphenol)]-terephthalat.

Die Aufzählung dieser Stabilisatoren ist nur beispielhaft und erhebt keinen Anspruch auf Vollständigkeit.

Als phenolische Stabilisatoren, die eine Mol-Masse größer als 300 g/mol, insbesondere größer als 1000 g/mol besitzen, sind u.a. geeignet:

- Octadecyl-3-(3,5-ditert.butyl-4-hydroxiphenyl)-propionat,
- Pentaerythrityl-tetrakis-3-(3,5-ditert.butyl-4-hydroxi-phenyl)-propionat,
- 1,3,5-Tris-(3,5-ditert.butyl-4-hydroxibenzyl)-isocyanurat,
- 1,1,3-Tris-(5-tert.butyl-4-hydroxi-2-methylphenyl)-butan,
- 1,3,5-Tris-(3,5-ditert.butyl-4-hydroxibenzyl)mesitylen,
- Ethylenglycol-bis-[3,3-bis-(3-tert.butyl-4-hydroxiphenyl)-butyrat].

Besonders vorteilhaft ist der Einsatz dieser phenolischen Stabilisatoren in Kombination mit phosphit- und phosphonithaltigen Stabilisatoren, wobei die Zusammensetzung aus phenolischen Stabilisatoren und den Phosphit- und Phosphonit-Stabilisatoren im Bereich 1:5 bis 5:1, insbesondere 1:3 bis 3:1 liegt. Hierfür geeignete phosphit- und phosphonithaltige Stabilisatoren sind:

- Tetrakis-(2,4-ditert.butylphenyl)-4,4'-biphenylylen-diphosphonit,

- Distearyl-pentaerythrit-diphosphit,
- Tris-(nonylphenyl)-phosphit,
- Tris-(2,4-ditert.butylphenyl)-phosphit,
- Bis-(2,4-ditert.butylphenyl)-pentaerythrit-diphosphit.

Die Mehrschichtfolien können in Rauhigkeitsbereichen für

a) glatte Folien mit einer Rauhigkeit $R_z$ = 0,08 bis 0,12 µm

b) Metallisierungsfolien mit einer Rauhigkeit $R_z$ = 0,15 bis 0,35 µm und

c) Imprägnierfolien mit einer Rauhigkeit $R_z$ = 0,5 bis 1,5 µm

liegen, wobei die Rauhigkeit der beiden Deckschichten im allgemeinen gleichgroß ist, die Deckschichten jedoch auch unterschiedliche Rauhigkeiten aufweisen können.

Bei der Mehrschichtfolie hat sich im übrigen gezeigt, daß eine besonders gute zeitliche Konstanz des dielektrischen Verlustfaktors dann gegeben ist, wenn die Folienoberflächen nicht koronabehandelt werden.

Im folgenden sind ein Beispiel für die Mehrschichtfolie und zwei Vergleichsbeispiele angeführt sowie eine allgemeine Übersicht über die Stoffklassen der Stabilisatoren, die für Polypropylen in Frage kommen.

Beispiel

Es wurde eine mit 0,1 Gew.-% Stabilisator versetzte Polypropylenschicht mit beidseitig aufgebrachten Deckschichten aus Polypropylen mit einem Stabilisatorgehalt von 0,5 Gew.-% durch eine Flachdüse koextrudiert. Nach dem Abkühlen der koextrudierten Mehrschichtfolie wurde diese in Längsrichtung und anschließend in Querrichtung verstreckt und zuletzt thermofixiert. Die so erhaltene Mehrschichtfolie hat eine Gesamtdicke von 8 µm wovon 6 µm auf die Dicke der Basisschicht und je 1 µm auf die Dicke der einzelnen Deckschicht entfällt. Eine Koronavorbehandlung erfolgt nicht.

Der Ausgangswert des dielektrischen Verlustfaktors tan $\delta$ beträgt $3 \,.\, 10^{-4}$. Der Verlustfaktor wurde bei einer Temperatur von 130 °C und bei einer Frequenz der angelegten Meßwechselspannung von 100 kHz gemessen. Der Verlustfaktor zeigt im übrigen noch eine geringe Abhängigkeit von der Temperatur und steigt mit dieser an.

Vergleichsbeispiel 1

Es wurde eine Standard-Polypropylenfolie mit einer Dicke von 8 µm und mit einem Stabilisatoranteil von 0,1 Gew.-% durch eine Flachdüse koextrudiert. Die Schmelze besteht im wesentlichen aus einem Polypropylen-Homopolymerisat und die erhaltene Polypropylenfolie hatte eine Dichte im Bereich von 0,905 bis 0,910 g/cm$^3$. Der Ausgangs- bzw. Anfangswert des dielektrischen Verlustfaktors tan $\delta$ bei einer Frequenz der Meßwechselspannung von 100 kHz und bei 130 °C beträgt $3 \,.\, 10^{-4}$. Eine Verdoppelung des Ausgangswertes erfolgte innerhalb von drei Tagen, woraus ersichtlich ist, daß eine große Zeitabhängigkeit des dielektrischen Verlustfaktors bei einer Standard-Polypropylenfolie im Vergleich zu der erfindungsgemäßen Mehrschichtfolie besteht.

Vergleichsbeispiel 2

Es wurde die gleiche Standard-Polypropylenfolie wie im Vergleichsbeispiel 1 verwendet, jedoch wurde der Anteil an Stabilisator auf 0,5 Gew.-% angehoben. Das führte dazu, daß der Ausgangswert des dielektrischen Verlustfaktors tan $\delta = 7 \cdot 10^{-4}$ ist und somit mehr als das Zweifache, verglichen mit der Mehrschichtfolie, wie sie im Beispiel angegeben ist. Ein derartiger Ausgangs-bzw. Anfangswert des dielektrischen Verlustfaktors ist für einen Kondensatorwickel bzw. für den Einsatz einer derartigen Folie als Elektroisolierfolie zu hoch. Der dielektrische Verlustfaktor stieg innerhalb von fünfzig Tagen auf den doppelten Wert.

Sowohl bei dem Beispiel für die erfindungsgemäße Mehrschichtfolie als auch bei den Vergleichsbeispielen 1 und 2 wurde zur Stabilisierung eine Stabilisatorkombination aus Pentaerythrityl-tetrakis(3(3,5-di-tert.butyl-4-hydroxyphenyl)-propionat) und Tris(2,4-di-tert.butyl-phenyl)phosphit (Mengenverhältnis 1:1) eingesetzt.

Die Stabilisierung der Basisschicht erfolgte bei dem Beispiel, wie angegeben, mit einem Anteil der voranstehend angeführten Stabilisatorkombination von 0,1 Gew.-%, während die Stabilisierung jeder Deckschicht mit jeweils einem Anteil von 0,5 Gew.-% der Stabilisatorkombination vorgenommen wurde.

Bei den Monofolien der Vergleichsbeispiele 1 und 2 erfolgte die Stabilisierung mit einem Anteil der Stabilisatorkombination von 0,1 Gew.-% bzw. von 0,5 Gew.-%.

Stabilisatoren für Polypropylen

Die folgende Tabelle gibt einen Überblick über die Stoffklassen von Stabilisatoren, die für Polypropylen geeignet sind.

a) Thiobisphenole, z.B.:

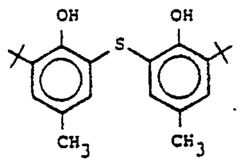 . 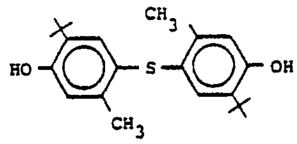

b) Alkyliden-Bisphenole, z.B.:

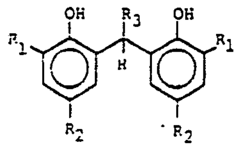

| $R_1$ | $R_2$ | $R_3$ |
|---|---|---|
| tert. butyl | tert. butyl | —H |
| tert. butyl | tert. butyl | $—CH_3$ |
| tert. butyl | sec. butyl | $—CH_3$ |
| 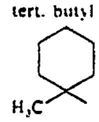 | $—CH_3$ | —H |
| tert. butyl | $—C_2H_5$ | —H |
| tert. butyl | $—CH_3$ | —H |
| 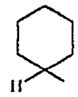 | $—CH_3$ | —H |
| $—C_9H_{19}$ | $—CH_3$ | —H |

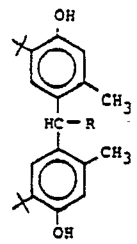

| R |
|---|
| $—C_3H_7$ |
| 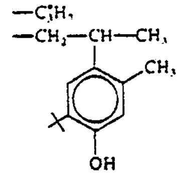 |

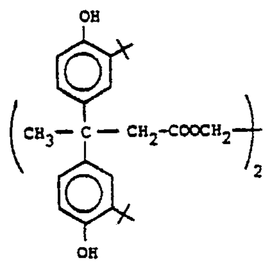

c) Alkylphenole, z.B.:

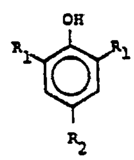

| $R_1$ | $R_2$ |
|---|---|
| tert. butyl | $—CH_3$ |
| 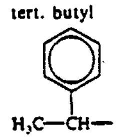 | $—C_9H_{19}$ |
| 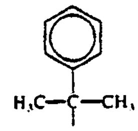 | $—C_9H_{19}$ |

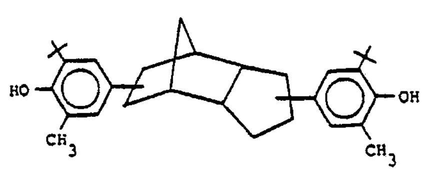

d) Hydroxibenzylverbindungen, z.B.:

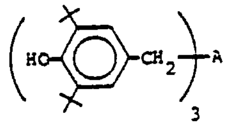

| A |
|---|
| 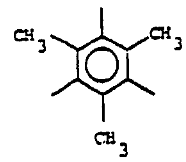 |
| 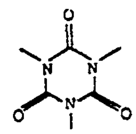 |

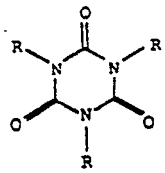

R = 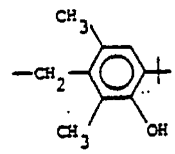

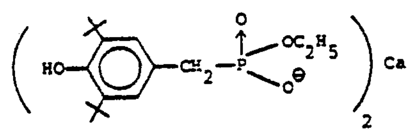

e) Acylaminophenole, z.B.:

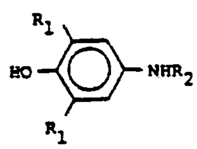

| $R_1$ | $R_2$ |
|---|---|
| —H | $-COC_{11}H_{23}$ |
| —H | $-COC_{17}H_{35}$ |
| tert. butyl | 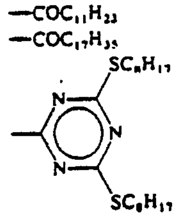 |

f) Hydroxiphenylpropionate, z.B.:

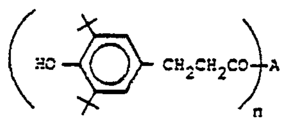

| n | A |
|---|---|
| 1 | $-OC_{18}H_{37}$ |
| 2 | $-O(CH_2)_6O-$ |
| 2 | $-NH-(CH_2)_6-NH-$ |
| 2 | $-O(CH_2)_2-S-(CH_2)_2O-O-$ |
| 3 | 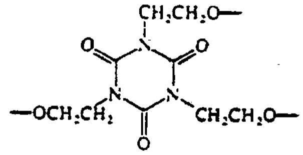 |
| 4 | $C-(CH_2O-)_4$ |

g) Sekundäre, aromatische Amine, z.B.:

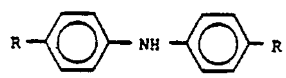

| R |
|---|
| tert. octyl |
| 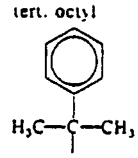 |

h) Thioether, z.B.:

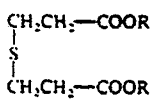

$C_{18}H_{37}-SS-C_{18}H_{37}$

| R |
|---|
| $-C_{12}H_{25}$ |
| $-C_{13}H_{27}$ |
| $-C_{18}H_{37}$ |

i) Phosphite und Phosphonite, z.B.:

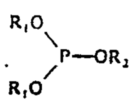

| $R_1$ | $R_2$ |
|---|---|
| —Phenyl | —n-Decyl |
| 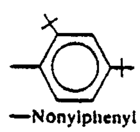 | 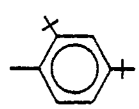 |
| —Nonylphenyl | —Nonylphenyl |

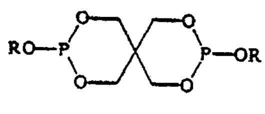

| R |
|---|
| $-C_{18}H_{37}$ |
| 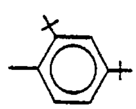 |

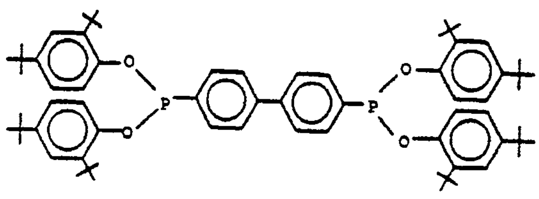

## Patentansprüche

1. Koextrudierte, biaxial orientierte Mehrschichtfolie mit einer Basisschicht aus hochreinem Polypropylen mit weniger als 100 ppm Restaschegehalt und zwei Deckschichten, dadurch gekennzeichnet, daß die

Deckschichten aus Polypropylen bestehen, daß sowohl in der Basis- als auch in den Deckschichten Stabilisatoren vorhanden sind und daß die Deckschichten die 3- bis 10-fache Menge an Stabilisator im Vergleich zu der Basisschicht enthalten.

2. Mehrschichtfolie nach Anspruch 1, dadurch gekennzeichnet, daß die Stabilisatoren für die Basis- und Deckschichten aus den Stoffklassen der sterisch gehinderten Phenole, Thioether, Phosphite, Phosphonite oder Mischungen dieser Stoffe ausgewählt sind.

3. Mehrschichtfolie nach Anspruch 2, dadurch gekennzeichnet, daß die Basisschicht bis zu 0,2 Gew.-% an Stabilisator und die einzelne Deckschicht zumindest 0,3 Gew.-% an Stabilisator enthält.

4. Mehrschichtfolie nach Anspruch 1, dadurch gekennzeichnet, daß die Gesamtdicke der Mehrschichtfolie 4 bis 30 µm, insbesondere 6 bis 20 µm beträgt.

5. Mehrschichtfolie nach den Ansprüchen 1 und 4, dadurch gekennzeichnet, daß die beiden Deckschichten gleich dick sind und jeweils eine Dicke von 0,3 bis 2,0 µm, insbesondere von 0,4 bis 0,8 µm haben.

6. Mehrschichtfolie nach Anspruch 3, dadurch gekennzeichnet, daß der Gehalt an Stabilisator in jeder Deckschicht 0,3 bis 1,0 Gew.-%, insbesondere 0,3 bis 0,5 Gew.-% beträgt.

7. Mehrschichtfolie nach Anspruch 2, dadurch gekennzeichnet, daß die phenolischen Stabilisatoren eine Molmasse größer als 300 g/Mol, insbesondere größer als 1000 g/Mol besitzen.

8. Mehrschichtfolie nach Anspruch 2, dadurch gekennzeichnet, daß phenolische Stabilisatoren in Kombination mit Phosphit- und Phosphonit-haltigen Stabilisatoren in einer Zusammensetzung von 1:5 bis 5:1, insbesondere 1:3 bis 3:1 eingesetzt sind.

9. Mehrschichtfolie nach Anspruch 4, dadurch gekennzeichnet, daß die Rauhigkeit $R_z$ kleiner/gleich 1,5 µm ist und insbesondere im Bereich von 0,35 bis 0,08 µm liegt und daß die beiden Deckschichten gleiche oder unterschiedliche Rauhigkeit aufweisen.

10. Elektrischer Folienkondensator, dadurch gekennzeichnet, daß er als Dielektrikum zwei Mehrschichtfolien nach den Ansprüchen 1 bis 9 und zwei Metallfolien aus A1, Sn oder Pb/Sn enthält.

## Claims

1. A coextruded, biaxially oriented, multi-layer film comprising a base layer composed of high-purity polypropylene having a residual ash content of less than 100 ppm and two top layers, characterized in that the top layers are comprised of polypropylene, stabilizers are present both in the base layer and in the top layers and that the top layers contain 3 to 10 times the amount of stabilizers present in the electrical insulation film material of the base layer.

2. A multi-layer film as claimed in claim 1, characterized in that the stabilizers for the base layer and the top layers are selected from the substance categories comprising sterically hindered phenols, thioethers, phosphites, phosphonites or mixtures of these substances.

3. A multi-layer film as claimed in claim 2, characterized in that the base layer contains up to 0.2 % by weight of stabilizer and the individual top layer contains at least 0.3 % by weight of stabilizer.

4. A multi-layer film as claimed in claim 1, characterized in that the total thickness of the multi-layer film is 4 to 30 µm, in particular 6 to 20 µm.

5. A multi-layer film as claimed in claims 1 and 4, characterized in that the two top layers are of equal thickness, and each has a thickness of 0.3 to 2.0 µm, in particular 0.4 to 0.8 µm.

6. A multi-layer film as claimed in claim 3, characterized in that the content of stabilizer in each top layer is 0.3 to 1.0 % by weight, in particular 0.3 to 0.5 % by weight.

7. A multi-layer film as claimed in claim 2, characterized in that the phenolic stabilizers have a molecular weight greater than 300 g/mol, in particular greater than 1000 g/mol.

8. A multi-layer film as claimed in claim 2, characterized in that phenoloic stabilizers are employed in combination with stabilizers containing phosphites and phosphonites in a combination ratio of 1:5 to 5:1, in particular 1:3 to 3:1.

9. A multi-layer film as claimed in claim 4, characterized in that the peak-to-valley height $R_z$ is less than or equal to 1.5 µm and is, in particular, within the range from 0.35 to 0.08 µm, and the two top layers have identical or different peak-to-valley heights.

10. An electric film capacitor, which contains, as the dielectric, two multi-layer films as claimed in claims 1 to 9 and two metal foils composed of Al, Sn or Pb/Sn.

## Revendications

1. Pellicule multicouche coextrudée, orientée biaxialement, comportant une couche de base en polypropylène très pur ayant une teneur en cendres résiduelles inférieure à 100 ppm, et deux couches de recouvrement, caractérisée en ce que les couches de recouvrement sont constituées de polypropylène, en ce que des stabilisants sont présents aussi bien dans la couche de base que dans les couches de recouvrement, et en ce que les couches de recouvrement contiennent une quantité de stabilisant de 3 à 10 fois plus élevée par comparaison avec la couche de base.

2. Pellicule multicouche selon la revendication 1, caractérisée en ce que les stabilisants pour les couches de base et de recouvrement sont choisis parmi les catégories de substances comprenant les phosphonites, les phosphites, thioéthers, phénols à empêchement stérique ou des mélange de ces substances.

3. Pellicule multicouche selon la revendication 2, caractérisée en ce que la couche de base contient jusqu'à 0,2 % en poids de stabilisant, et la couche de recouvrement individuelle contient au moins 0,3 % en poids de stabilisant.

4. Pellicule multicouche selon la revendication 1, caractérisée en ce que l'épaisseur totale de la pellicule multicouche va de 4 à 30 µm, en particulier de 6 à 20 µm.

5. Pellicule multicouche selon les revendications 1 et 4, caractérisée en ce que les deux couches de recouvrement sont de même épaisseur et ont chacune une épaisseur de 0,3 à 2,0 µm, en particulier de 0,4 à 0,8 µm.

6. Pellicule multicouche selon la revendication 3, caractérisée en ce que dans chaque couche de recouvrement la teneur en stabilisant va de 0,3 à 1,0 % en poids, en particulier de 0,3 à 0,5 % en poids.

7. Pellicule multicouche selon la revendication 2, caractérisée en ce que les stabilisants phénoliques ont une masse moléculaire supérieure à 300 g/mole, en particulier supérieure à 1 000 g/mole.

8. Pellicule multicouche selon la revendication 2, caractérisée en ce que l'on utilise des stabilisants phénoliques en association avec des stabilisants contenant des phosphites et des phosphonites, en un rapport de 1:5 à 5:1, en particulier de 1:3 à 3:1.

9. Pellicule multicouche selon la revendication 4, caractérisée en ce que la rugosité $R_z$ est inférieure ou égale à 1,5 µm et se situe en particulier dans la plage de 0,35 à 0,08 µm, et en ce que les deux couches de recouvrement présentent des rugosités identiques ou différentes.

10. Condensateur électrique pelliculaire, caractérisé en ce qu'il contient en tant que diélectrique deux pellicules multicouches selon les revendications 1 à 9 et deux feuilles métalliques en Al, Sn ou Pb/Sn.